# EUROPEAN PATENT APPLICATION

(11) **EP 4 800 957 A1**
(43) Date of publication of application: **02.09.2026**
(21) Application number: 24882889.9
(22) Date of filing: 25.10.2024
(51) Int. Cl.: H04L 5/00

(54) **METHOD AND APPARATUS FOR PERFORMING CARRIER MAPPING IN COMMUNICATION SYSTEM**

(30) Priority: 26.10.2023 KR 20230144865
(71) Applicant: SOLiD, Inc., Gyeonggi-do 13493 (KR)
(72) Inventor: LEE, Hyunbeom, Yongin-si, Gyeonggi-do 17066 (KR)
(74) Representative: Jung, Minkyu
(86) International application number: PCT/KR2024/016377
(87) International publication number: WO 2025/089862

(57) **Abstract**

The present disclosure relates to a method and an apparatus for performing carrier mapping in a communication system. A method performed by an electronic device in a communication system includes: receiving a configuration control signal from another electronic device; determining a signal processing structure based on the configuration control signal; and performing signal processing based on the signal processing structure, wherein the signal processing structure is configured with at least one and five or less physical layer blocks based on the configuration control signal, the signal processing structure includes a physical layer block having a bandwidth capability of 100MHz, and the signal processing structure preferentially includes up to two physical layer blocks having a bandwidth capability of 50MHz and then may include up to two physical layer blocks having a bandwidth capability of 20MHz according to the number of the physical layer blocks.

## Description

### TECHNICAL FIELD

The present disclosure relates to a method and an apparatus for performing carrier mapping in a communication system.

### BACKGROUND ART

The demand for frequency spectrum required for building broadband wireless networks is increasing due to the explosive growth of wireless data traffic worldwide. In response to this increase in frequency demand, various frequency sharing technologies and techniques that can maximize frequency efficiency within limited frequencies are being developed. To solve the problem of increasing frequency demand, the Federal Communications Commission (FCC) in the United States has designated the 3550MHz to 3700MHz band for Citizens Broadband Radio Service (CBRS) to build low-power networks using small-cells and uses it as a shared frequency band by dividing user tiers for each frequency band.

As wireless communication systems develop and evolve into 4th generation (4G) communication systems, 5th generation (5G) communication systems, etc., various functions and specifications are required. To satisfy these functions and specifications, various methods have been introduced, and one of them is a method of implementing a network infrastructure structure by functionally splitting it. A representative configuration of the functional split method is that a base station can be expressed as a centralized unit (CU), a distributed unit (DU), and a radio unit (RU) according to its function, and interfaces of respective units are defined by organizations such as 3GPP and the O-RAN alliance.

Among these, for the CBRS band that provides LTE and NR communication services, the ORAN standard based on 'Option 7-2', one of the functional split options, is being applied. Option 7-2 may represent communication between an O-RU (Open RAN (radio access network) (O-RAN) radio unit) and an O-DU (O-RAN) distributed unit).

### DESCRIPTION OF EMBODIMENTS

### TECHNICAL PROBLEM

One problem to be solved by the present disclosure is to provide a method for saving resources such as FPGA, thereby enabling low-power use, device miniaturization, and cost reduction through carrier mapping in a communication system.

### SOLUTION TO PROBLEM

According to an embodiment, a method performed by an electronic device in a communication system includes: receiving a configuration control signal from another electronic device; determining a signal processing structure based on the configuration control signal; and performing signal processing based on the signal processing structure, wherein the signal processing structure is configured with one or more and five or less physical layer blocks based on the configuration control signal, the signal processing structure includes a physical layer block having a bandwidth capability of 100MHz, and the signal processing structure preferentially includes up to two physical layer blocks having a bandwidth capability of 50MHz and then includes up to two physical layer blocks having a bandwidth capability of 20MHz according to the number of the physical layer blocks.

In an embodiment, the configuration control signal may include bandwidth allocation information for at least one component carrier, and the bandwidth allocation information may include information about the number of the at least one carrier and the size of the bandwidth corresponding to the at least one carrier.

In an embodiment, the step of performing signal processing based on the signal processing structure may include performing signal processing by mapping to the physical layer blocks corresponding to a carrier index of the at least one carrier, when the size of the bandwidth corresponding to the at least one carrier indicated by the bandwidth allocation information is all 20MHz or less.

In an embodiment, the step of performing signal processing based on the signal processing structure may include mapping a carrier with the smallest bandwidth size among the at least one carrier to a physical layer block with the smallest bandwidth capability among the physical layer blocks, when the size of at least one bandwidth corresponding to the at least one carrier indicated by the bandwidth allocation information exceeds 20MHz.

In an embodiment, the step of performing signal processing based on the signal processing structure may include: when a value of the bandwidth of the carrier with the smallest bandwidth size among the at least one carrier is greater than a value of the bandwidth capability of the physical layer block with the smallest bandwidth capability, mapping the carrier with the smallest bandwidth size among the at least one carrier to a physical layer block with the next smallest bandwidth capability, instead of mapping to the physical layer block with the smallest bandwidth capability.

In an embodiment, the step of performing signal processing based on the signal processing structure may include mapping in order of carriers with smaller bandwidth sizes among the at least one carrier to physical layer blocks with smaller bandwidth capabilities among the physical layer blocks.

In an embodiment, the step of performing signal processing based on the signal processing structure may include performing digital signal processing on data corresponding to at least one carrier mapped to the physical layer blocks based on the signal processing structure.

In an embodiment, the method may further include mapping the at least one digitally signal-processed carrier to an alarm block corresponding to the carrier index of the at least one carrier included in the configuration control signal.

In an embodiment, the method may further include transmitting a response signal including a configuration result for the configuration control signal to the other electronic device based on the mapped alarm block.

According to another aspect of the present disclosure, an electronic device in a communication system includes: a transceiver; a memory; and at least one processor connected to the transceiver and the memory, wherein the at least one processor is configured to receive a configuration control signal from another electronic device, determine a signal processing structure based on the configuration control signal, and perform signal processing based on the signal processing structure, wherein the signal processing structure is configured with one or more and five or less physical layer blocks based on the configuration control signal, the signal processing structure includes a physical layer block having a bandwidth capability of 100MHz, and the signal processing structure preferentially includes up to two physical layer blocks having a bandwidth capability of 50MHz and then includes up to two physical layer blocks having a bandwidth capability of 20MHz according to the number of the physical layer blocks.

### ADVANTAGEOUS EFFECTS OF DISCLOSURE

According to an embodiment of the present disclosure, resources can be saved and costs can be reduced through mapping physical layer blocks for component carriers.

The effects according to the inventive concept of the present disclosure are not limited to the effects mentioned above, and other effects not mentioned may be clearly understood by one of ordinary skill in the art from the following description.

### BRIEF DESCRIPTION OF DRAWINGS

FIG. 1A is a view of a wireless communication system according to various embodiments of the present disclosure.
FIG. 1B is a view illustrating an example of a fronthaul structure according to a functional split of a base station, according to various embodiments of the present disclosure.
FIG. 2 is a view of a carrier configuration in CBRS according to an embodiment of the present disclosure.
FIG. 3 is a view of an FPGA signal processing block diagram using multiple carriers according to an embodiment of the present disclosure.
FIGS. 4A and 4B are views illustrating a design plan for a signal processing structure using multiple carriers.
FIG. 5A is a flowchart illustrating an O-RU operation procedure according to an embodiment of the present disclosure.
FIG. 5B is a view illustrating a case where an error occurs in a multi-carrier operation according to an embodiment of the present disclosure.
FIG. 6 is a flowchart illustrating a multi-carrier mapping algorithm according to an embodiment of the present disclosure.
FIG. 7 is a view illustrating a multi-carrier mapping and multi-carrier restoration mapping method according to an embodiment of the present disclosure.
FIG. 8 is a view illustrating a configuration of an O-DU according to an embodiment of the present disclosure.
FIG. 9 is a view illustrating a configuration of an O-RU according to an embodiment of the present disclosure.

### MODE OF DISCLOSURE

Hereinafter, embodiments of the disclosure will be described in detail with the accompanying drawings.

In the description of the embodiments of the disclosure, certain detailed explanations of a related function or configuration are omitted when it is deemed that they may unnecessarily obscure the essence of the disclosure. In addition, the terms described below are defined in consideration of the functions in the disclosure, and may vary depending on the intention or custom of a user or an operator. Therefore, the definition needs to be made based on content throughout this specification.

For the same reason, some components may be exaggerated, omitted, or schematically shown in the accompanying drawings. In addition, the size of each component does not entirely reflect its actual size. In each drawing, identical or corresponding components are given the same reference numerals.

Advantages and features of the disclosure, and implementation methods thereof will be clarified through following embodiments described with reference to the accompanying drawings. However, the disclosure is not limited to the embodiments disclosed below, but may be implemented in various different forms. The embodiments are provided only to ensure that the description of the disclosure is complete and to fully inform one of ordinary skill in the art of the scope of the invention to which the embodiments of the disclosure pertain, and the claimed scope of the disclosure is only defined by the scope of the claims.

At this time, it will be understood that each block of processing flowcharts and combinations of the processing flowcharts may be performed by computer program instructions. Because these computer program instructions may be mounted on a processor of a general-purpose computer, special-purpose computer, or other programmable data processing equipment, the instructions performed through the processor of the computer or other programmable data processing device creates a unit to perform functions described in flow chart block(s). These computer program instructions may also be stored in computer-usable or computer-readable memory that can be directed to a computer or other programmable data processing equipment to implement the functions in a particular manner. Accordingly, the instructions stored in the computer-usable or computer-readable memory may also produce manufactured items containing an instruction unit that performs the functions described in the flow chart block(s). Because the computer program instructions can be mounted on a computer or other programmable data processing equipment, instructions that execute a computer or other programmable data processing equipment by performing a series of operations on a computer or other programmable data processing equipment to generate a computer-executable process may also provide operations for executing the functions described in the flow chart block(s).

In addition, each block may represent a module, segment, or portion of code containing one or more executable instructions for executing specified logical function(s). In addition, in some alternative implementations, it should be noted that functions mentioned in the blocks to occur out of order. For example, two blocks shown in succession may be performed substantially simultaneously, or the blocks may sometimes be performed in reverse order depending on their corresponding functions.

The term "unit or part" used in the disclosure refers to software or hardware components such as a field-programmable gate array (FPGA) or an application specific integrated circuit (ASIC), and the "unit or part" may be configured to perform specific roles. However, the "unit or part" is not limited to software or hardware. The "unit or part" may be configured to be stored in an addressable storage medium or to execute one or more processors. Accordingly, the "unit or part" may include, for example, software components, object-oriented software components, components such as class components and task components, processors, functions, attributes, procedures, subroutines, segments of program codes, drivers, firmware, micro codes, circuits, data, database, data structures, tables, arrays and variables. Functions provided in components and "units or parts" may be combined into a smaller number of components and "units or parts", or may be further divided into additional components and "units or parts". Furthermore, components and "units or parts" may be implemented to reproduce one or more central processing units (CPUs) within a device or a secure multimedia card. In addition, in an embodiment, "unit or part" may include one or more processors and/or devices.

In various embodiments, the technologies described in the disclosure and systems and devices for implementation thereof may utilize other radio access technologies such as WiFi or WiMax as well as radio access technologies such as code division multiple access (CDMA), time division multiple access (TDMA), frequency division multiple access (FDMA), orthogonal FDMA (OFDMA), single-carrier FDMA (SC-FDMA), LTE, GSM, 5G NR, and the like to support communication between networks (or systems).

Various other embodiments and features according to the inventive concept of the disclosure will be further described later below. It should be apparent that the teachings herein may be implemented in a wide variety of forms and any particular structure, function, or both, disclosed herein are merely exemplary, and not limiting. Based on the teachings herein, those of ordinary skill in the art will appreciate that aspects disclosed herein may be implemented independently of any other aspects, and two or more of these aspects may be combined in various ways. For example, a device or a method may be implemented by using any number of aspects set forth herein. Furthermore, the device or the method may be implemented with structures and functions of one or more of the aspects described herein, or may be implemented by using structures and functions of other aspects. For example, the method may be implemented as a part of commands stored on a non-transitory computer-readable recording medium for execution on a computer or processor. Furthermore, one aspect may include at least one component of the claim.

Hereinafter, preferred embodiments of the disclosure will be described in detail with reference to the accompanying drawings. At this time, it should be noted that the same components in the attached drawings are indicated by the same symbols as much as possible. In addition, detailed descriptions of well-known functions and configurations that may obscure the gist of the disclosure will be omitted.

In describing the embodiments in this specification, descriptions of technical content that is well-known in the art and not directly related to the disclosure will be omitted. This is to convey the gist of the disclosure more clearly without obscuring it by omitting unnecessary explanation.

For the same reason, some components are exaggerated, omitted, or schematically shown in the accompanying drawings. In addition, the size of each component does not entirely reflect its actual size. In each drawing, identical or corresponding components are given the same reference numerals.

Advantages and features of the disclosure, and implementation methods thereof will be clarified through following embodiments described with reference to the accompanying drawings. However, the disclosure is not limited to the embodiments disclosed below, but may be implemented in various different forms. The embodiments are provided only to ensure that the disclosure is complete and to fully inform one of ordinary skill in the art of the scope of the disclosure, and the disclosure is only defined by the scope of the claims. Like reference numerals refer to like elements throughout.

At this time, it will be understood that each block of processing flow charts and combinations of the processing flow charts may be performed by computer program instructions. These computer program instructions may be mounted on a processor of a general-purpose computer, special-purpose computer, or other programmable data processing equipment, so the instructions performed through the processor of the computer or other programmable data processing equipment create a unit to perform functions described in the flow chart block(s). These computer program instructions may also be stored in computer usable or computer readable memory that can direct a computer or other programmable data processing equipment, so the instructions stored in the computer usable or computer readable memory may produce manufactured items that include an instruction unit that performs the functions described in the flow chart block(s). The computer program instructions may also be mounted on a computer or other programmable data processing equipment, so the instructions that perform a series of operational steps on the computer or other programmable data processing equipment to generate a computer-executed process may also provide steps for executing the functions described in the flow chart block(s).

Also, each block may represent a module, segment, or portion of code containing one or more executable instructions for executing specified logical function(s). In addition, in some alternative implementations, it should be noted that functions mentioned in the blocks may occur out of order. For example, two blocks shown in succession may be performed substantially simultaneously, or the blocks may sometimes be performed in reverse order depending on their corresponding functions.

At this time, the term '~unit' used in this embodiment means a software or hardware component such as FPGA or ASIC, and the '~unit' performs certain roles. However, '~unit' is not limited in meaning to software or hardware. A '~unit' may be configured to be in an addressable storage medium or to reproduce one or more processors. Accordingly, as an example, a '~unit' includes components such as software components, object-oriented software components, class components, and task components, and processes, functions, attributes, procedures, subroutines, segments of program code, drivers, firmware, microcode, circuits, data, databases, data structures, tables, arrays, and variables. A function provided in components and '~units' may be combined into a smaller number of components and '~units' or further separated into additional components and '~units'. In addition, components and '~units' may be implemented to reproduce one or more CPUs within a device or a secure multimedia card.

Hereinafter, a base station is an entity that performs resource allocation for a terminal and may be at least one of a Node B, BS (Base Station), eNB (eNode B), gNB (gNode B), a radio access unit, a base station controller, or a node on a network. The terminal may include a UE (User Equipment), MS (Mobile Station), a cellular phone, a smartphone, a computer, or a multimedia system capable of performing communication functions. In addition, the embodiments of the present disclosure described below may be applied to other communication systems having a similar technical background or channel type as the embodiment of the present disclosure. Also, the embodiments of the present disclosure may be applied to other communication systems through some modifications within a scope that does not significantly depart from the scope of the present disclosure, at the discretion of one of ordinary skill in the art.

Terms used in the following description, such as terms for identifying an access node, terms referring to network entities or NFs (network functions), terms referring to messages, terms referring to interfaces between network objects, and terms referring to various identification information, are provided as examples for convenience of explanation. Therefore, the disclosure is not limited to the terms described below, and other terms referring to objects having equivalent technical meaning may be used.

For convenience of explanation below, some terms and names defined in 3rd generation partnership project (3GPP) long-term evolution (LTE), Internet engineering task force (IETF) and IEEE 802 Project standards may be used. However, the disclosure is not limited by the above terms and names, and may be equally applied to systems according to other standards.

Hereinafter, various embodiments according to the inventive concept of the disclosure will be described in detail one by one.

An O-DU (O-RAN Distributed Unit) may be a part of an O-RAN system, which is generally implemented in software. In more detail, the O-DU may be a logical node hosting an RLC/MAC/High-PHY layer based on a lower layer functional split. An O-RU (O-RAN radio unit) may be a logical node that performs RF processing and hosts a Low-PHY layer based on a lower layer functional split. It can perform the role of transmitting/receiving radio signals, which is the biggest feature of 3GPP's "TRP" or "RRH".

User Equipment (UE) is a device, such as a mobile phone, that allows a user to access a network service.

An uplink (UL) refers to a traffic flow through different network components from the UE to a network and from the O-RU to the O-DU. An interface from the UE to the O-RU is wireless, while a UL traffic from the O-RU to the O-DU may take various forms (e.g., Ethernet connection) such as wireless and wired.

A downlink (DL) refers to a traffic flow through network components from the O-DU to the O-RU and from the network to the UE. A fronthaul interface from the O-DU to the O-RU may have various forms (e.g., Ethernet) such as wired or wireless, while an interface from the O-RU to the UE may be a wireless interface.

The O-RAN specification may include four planes: user plane (U-plane), control plane (C-plane), synchronization plane (S-plane), and management plane (M-plane).

The user plane (U-plane) may be a concept that includes IQ sample data transmitted between the O-DU and the O-RU.

The control plane (C-plane) is a concept that specifically refers to scheduling information, beamforming information transfer, and other real-time control between the O-DU and the O-RU, and may be distinguished from a UE's control plane.

The synchronization plane (S-plane) generally includes configuration and exchange of information for time and frequency synchronization methods, and may include other network elements in addition to the O-DU and the O-RU.

The management plane (M-plane) is a concept that represents a non-real-time management operation for the O-RU. This non-real-time management operation may be executed bidirectionally by the O-RU and an O-RU controller, and the O-RU controller may reside in the O-DU or a service management and orchestration system (SMO), or may exist as a separate device.

An M-plane interface is a link between the O-RU controller and the O-RU to exchange non-real-time management information.

A section type is a delimiter of a C-plane message format and consists of different data fields depending on the purpose, such as scheduling format, beamforming information configuration format, ACK/NACK instruction response, and LAA information exchange.

Section extension data is mainly flowed from the O-DU to the O-RU,
and is optional additional information attached to the end of section data in a C-plane message, and may transmit additional real-time control information to support objectives that cannot be achieved in a normal configuration format or to achieve optimization.

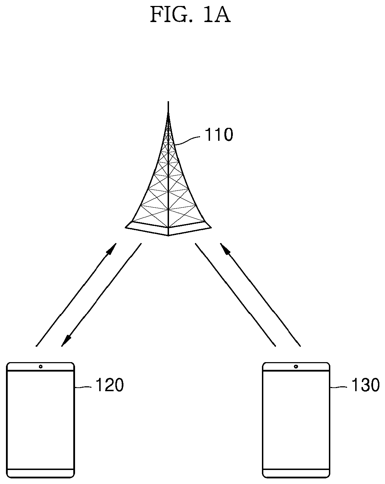

FIG. 1A is a view of a wireless communication system according to various embodiments of the present disclosure. FIG. 1A illustrates a base station 110, a first terminal 120, and a second terminal 130 as some of nodes that use a wireless channel in the wireless communication system. FIG. 1A shows only one base station, but other base stations identical or similar to the base station 110 may be further included.

The base station 110 is a network infrastructure that provides radio access to the terminals 120 and 130. The base station 110 has coverage defined as a certain geographic area based on a distance over which signals can be transmitted. The base station 110 may be referred to as "base station", "access point (AP)", "eNodeB (eNB)", "5th generation node (5G node)", "next generation nodeB (gNB)", "wireless point", "transmission/reception point (TRP)", or other terms with equivalent technical meaning.

Each of the terminals 120 and 130 is a device used by a user and communicates with the base station 110 through a wireless channel. A link from the base station 110 to the first terminal 120 or the second terminal 130 is called a downlink (DL), and a link from the first terminal 120 or the second terminal 130 to the base station 110 is called an uplink (UL). In addition, the first terminal 120 and the second terminal 130 may communicate with each other through a wireless channel. In some cases, at least one of the first terminal 120 and the second terminal 130 may be operated without user involvement. In other words, at least one of the first terminal 120 and the second terminal 130 is a device that performs machine type communication (MTC) and may not be carried by a user. Each of the first terminal 120 and the second terminal 130 may be referred to as "terminal", "user equipment (UE)", "customer premises equipment (CPE)", "mobile station", "subscriber station", "remote terminal", "wireless terminal", "electronic device", "user device", or other terms having equivalent technical meaning.

Conventionally, in a communication system with a relatively large cell radius of base stations, each base station is installed to include functions of a digital processing unit (or digital unit (DU)) and a radio frequency (RF) processing unit (or radio unit (RU)). However, as higher frequency bands are used in 4G (4th generation) and/or later communication systems and the cell radius of base stations becomes smaller, the number of base stations to cover a specific area increases, and an installation cost burden on an operator to install the increased number of base stations increases. In order to minimize an installation cost of a base station, a structure has been proposed in which a DU and an RU of a base station are split, one or more RUs are connected to one DU through a wired network, and one or more geographically distributed RUs are deployed to cover a specific area.

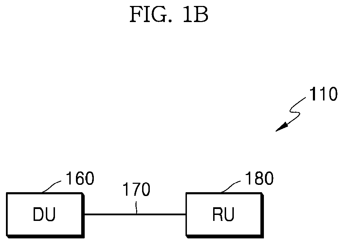

FIG. 1B is a view illustrating an example of a fronthaul structure according to a functional split of a base station, according to various embodiments of the present disclosure. A fronthaul refers to a link between entities between a wireless LAN and the base station, unlike a backhaul between the base station and a core network.

Referring to FIG. 1B, the base station 110 may include a DU 160 and an RU 180. A fronthaul 170 between the DU 160 and the RU 180 may be operated through an Fx interface. For operation of the fronthaul 170, for example, an interface such as enhanced common public radio interface (eCPRI) or radio over Ethernet (ROE) may be used.

As communication technology develops, mobile data traffic increases, and accordingly, a bandwidth requirement for a fronthaul between a DU and an RU increases significantly. In a deployment such as a centralized/cloud radio access network (C-RAN), the DU may be implemented to perform functions for packet data convergence protocol (PDCP), radio link control (RLC), media access control (MAC), and physical (PHY), and the RU may be implemented to further perform functions for a PHY layer in addition to a radio frequency (RF) function.

The DU 160 may be responsible for an upper layer function of a wireless network. For example, the DU 160 may perform a function of an MAC layer and a portion of the PHY layer. Here, a portion of the PHY layer is performed at a higher level from among the functions of the PHY layer and may include, for example, channel encoding (or channel decoding), scrambling (or descrambling), modulation (or demodulation), and layer mapping (or layer demapping). According to an embodiment, when the DU 160 complies with an O-RAN standard, the DU 160 may be referred to as an O-RAN DU (O-DU). The DU 160 may be represented as a replacement for a first network entity for a base station (e.g., gNB) in embodiments of the disclosure, as needed.

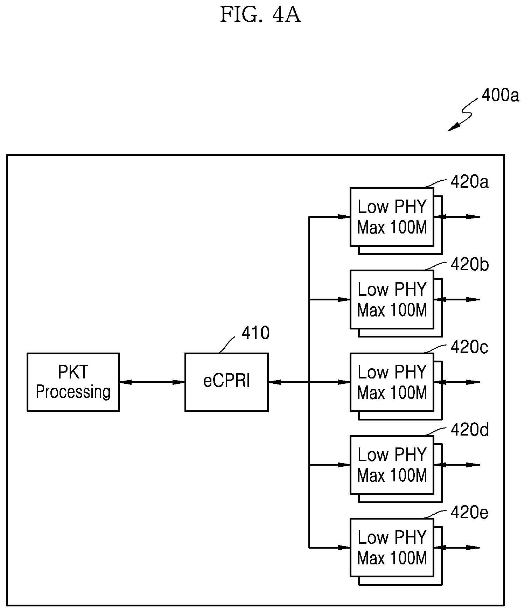

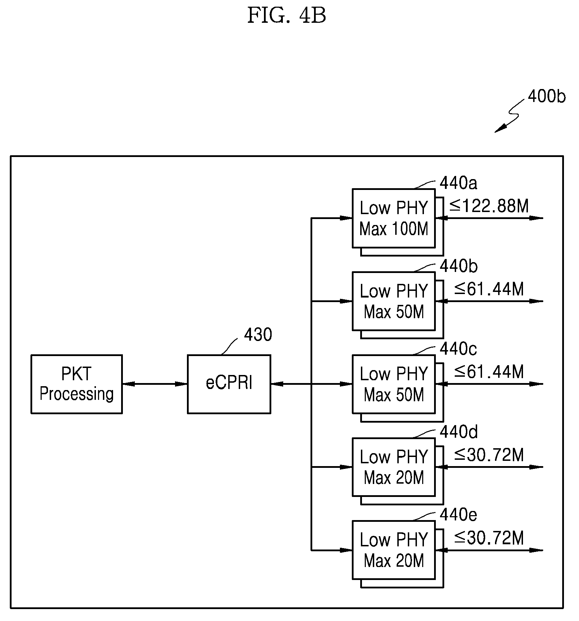

The RU 180 may be responsible for a lower layer function of a wireless network. For example, the RU 180 may perform a portion of the PHY layer and an RF function. Here, a portion of the PHY layer is performed at a relatively lower level than the DU 160 from among the functions of the PHY layer and may include, for example, IFFT conversion (or FFT conversion), CP insertion (CP removal), and digital beamforming. An example of this specific functional split will be described in detail in FIG. 4. The RU 180 may be referred to as "access unit (AU)", "access point (AP)", "transmission/reception point (TRP)", "remote radio head (RRH)", "radio unit (RU)", or other terms having equivalent technical meaning. According to an embodiment, when the RU 180 complies with an O-RAN standard, the RU 180 may be referred to as an O-RAN RU (O-RU). The DU 180 may be represented as a replacement for a second network entity (e.g., another FHM) for a base station (e.g., gNB) in embodiments of the disclosure, as needed.

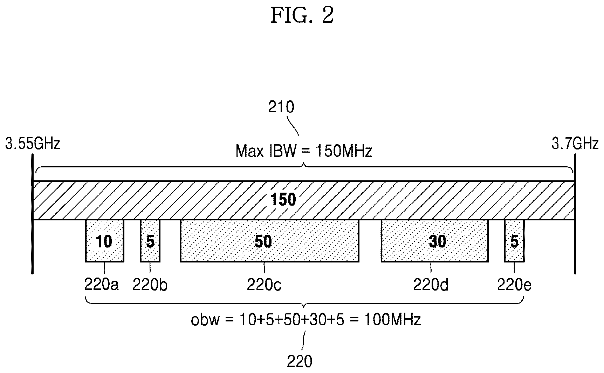

FIG. 2 is a view of a carrier configuration in CBRS according to an embodiment of the present disclosure.

The O-DU and O-RU described in the present disclosure may be the CBRS O-DU and CBRS O-RU of FIG. 2. A CBRS O-RU may be an In-building low-power device that supports a CBRS IBW (210) (Instantaneous bandwidth) 3550~3700MHz frequency band and supports a combination of at least one to a maximum of five component carriers (hereinafter, carriers) of 5MHz~100MHz within a CBRS OBW (220) (occupied bandwidth) of 100MHz. For example, the CBRS OBW 220 may include carriers having a range of 5MHz~100MHz, such as a first carrier 220a, a second carrier 220b, a third carrier 220c, a fourth carrier 220d, and a fifth carrier 220e. The CBRS OBW 220 may be configured to 100MHz through a combination of five carriers having a range of 5MHz~100MHz.

A CBRS O-RU can support up to five multiple carriers, so it occupies a lot of FPGA (Field Programmable Gate Array) resources compared to a device that supports only one carrier. As FPGA resources increase, power consumption increases and the FPGA grade becomes higher, so efforts are required to reduce it. Hereinafter, an O-RU may refer to a CBRS O-RU.

In the ORAN standard, an O-DU is designed to check the endpoint type, which is a classification name of antennas and paths for each carrier that an O-RU has, and set the carrier according to the capability of each endpoint. The endpoint type information is known through the "yang parameter" of YANG, a data modeling language, in the O-RAN fronthaul M-Plane. However, currently, in the O-DU, the carrier is set without relation to the capability information of the endpoint type intended by the O-RAN standard. Accordingly, the O-RU, which has limited FPGA resources due to constraints such as price and power consumption, must be designed to support 100MHz BW for all five carrier capabilities. That is, the O-DU identifies the capability of each carrier based on the endpoint type and can perform U-plane configuration control of the YANG module. However, in the O-DU, since it is used by arbitrarily adjusting the BW value of 5 component carriers (CC) regardless of the capability value, the maximum BW of the 5 carriers must all be set to handle 100MHz signals.

In this case, a carrier mapping algorithm of a method of combining multiple carriers by calculating the maximum bandwidth that each endpoint type must support can be proposed.

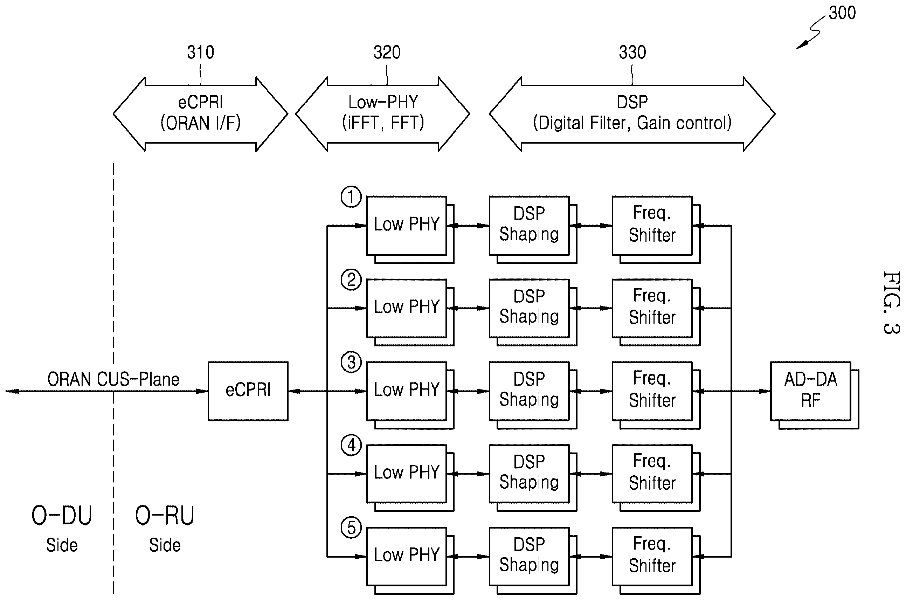

FIG. 3 is a view of an FPGA signal processing block diagram using multiple carriers according to an embodiment of the present disclosure.

The O-RU of FIG. 3 may be the same as the RU 180, O-RU, CBRS O-RU of FIGS. 1A to 2. In ORAN 'Option 7-2', an O-DU is in charge of baseband signal processing such as scrambling and modulation, which are upper physical layer (High-PHY) functions, and an O-RU performs wireless signal processing such as A/D (Analog to Digital) - D/A (Digital to Analog) conversion and FFT (Fast Fourier Transform), which are lower physical layer (Low-PHY) functions.

Referring to FIG. 3, FPGA signal processing in an O-RU can be largely divided into three stages.

An eCPRI stage 310 is configured with an eCPRI (evolved Common Public Radio Interface) protocol packet fronthaul interface, and a time offset of a C/U-plane can be set in an eCPRI block, and identifiers of a MAC (media access control) address and a VLAN (virtual LAN (local area network)) signal can be distinguished.

A Low-PHY stage 320 is a stage after the eCPRI stage 310, where FFT and IFFT of IQ data of a U-plane are performed in a lower physical layer block (or Low-PHY block) according to each carrier, and Windowing and Phase compensation are performed according to the Tech, Bandwidth (BW), and Subcarrier Spacing (SCS) of each signal.

A DSP stage 330 represents a digital signal processing stage, and can perform roles such as frequency shift of each carrier, signal ON/OFF (path enable/disable), digital filtering, gain up/down, and delay control.

The structure of an O-RU that supports multi-carriers of various BWs can be determined by the maximum signal processing bandwidth and the number of carriers. In the case of a CBRS O-RU using multiple carriers, a plurality of Low PHY blocks may be included in the Low-PHY stage 320. For example, five Low PHY blocks may be included for processing five multiple carriers. Here, the Low-PHY stage 320 may include at least one and up to five physical layer blocks. Each carrier is distributed to a plurality of Low PHY blocks in the Low-PHY stage 320 and can be processed up to the DSP stage 330. The FPGA resource can be determined by the FFT structure that processes the number of resource blocks (RB) and SCS of the BW that the Low PHY and DSP block can process at maximum. The more BW is processed, the more FPGA resources are used.

FIGS. 4A and 4B are views illustrating a design plan for a signal processing structure using multiple carriers.

FIG. 4A may show a multi-carrier use signal processing structure when a carrier mapping algorithm is not applied. FIG. 4B may show a multi-carrier use signal processing structure when a carrier mapping algorithm is applied.

Referring to FIG. 3, the wider the BW is processed, the more FPGA resources must be used. For example, in FIGS. 4A and 4B, a first signal processing structure 400a is designed to process signals of all carriers at 100MHz, and a second signal processing structure 400b may be an optimal structure designed to have a minimum BW.

Referring to FIG. 4A, a CBRS O-RU can support up to five carriers, and an O-DU must set parameters according to the maximum bandwidth (Bandwidth) condition of each CC, which is an endpoint type, after acquiring capability information of each component carrier, but in reality, it is used by setting an arbitrary BW without using the capability information. In this case, the CBRS O-RU must be designed to support a bandwidth of 100MHz for the capability value of all carriers in order to be able to process all carriers, so a structure such as the first signal processing structure 400a can be designed. However, in this case, the FPGA grade becomes high and power consumption increases, causing a waste of resources. In the first signal processing structure 400a, it can be confirmed that a first Low PHY block 420a, a second Low PHY block 420b, a third Low PHY block 420c, a fourth Low PHY block 420d, and a fifth Low PHY block 420e are all designed with the same 100MHz.

FIG. 4B may be an example of a signal processing structure to which a carrier mapping algorithm according to an embodiment of the present disclosure is applied. Referring to FIG. 4B, in a second signal processing structure 400b, the BW of Low-PHY signal processing is divided into three structures of 100MHz, 50MHz, and 20MHz according to the Sampling Rate condition, and the respective blocks mapped with five multiple carriers are applied with 100MHz, 50MHz, 50MHz, 20MHz, and 20MHz BW. The reason for including two 50MHz blocks is to consider the case where the OBW is divided into two carriers and a maximum of two 50MHz multiple carriers can be used, and the case of being configured with three 30MHz carriers. The reason for including two 20MHz blocks is to consider the case where five 20MHz carriers are configured when multiple carriers are used to the maximum. An O-RU can be configured as the second signal processing structure 400b as a signal processing structure based on a configuration control signal received from an O-DU. The second signal processing structure 400b may include a sixth Low PHY block 440a, a seventh Low PHY block 440b, an eighth Low PHY block 440c, a ninth Low PHY block 440d, and a tenth Low PHY block 440e. In the case of the sixth Low PHY block 440a, it was set to 100MHz to process the case where one carrier of up to 100MHz is included. In the case of the seventh Low PHY block 440b and the eighth Low PHY block 440c, they were configured as 50MHz to process the case where multiple carriers are configured with three 30MHz + a. In this case, the seventh Low PHY block 440b and the eighth Low PHY block 440c can have any value from 50MHz to 100MHz, but it reflects the most efficient point of 50MHz in terms of saving. In the case of the ninth Low PHY block 440d and the tenth Low PHY block 440e, they were configured as 20MHz to process the case where multiple carriers are configured with five 20MHz carriers. The ninth Low PHY block 440d and the tenth Low PHY block 440e can also have any value from 20MHz to 100MHz, but it reflects the most efficient point of the lowest value of 20MHz in terms of saving. Therefore, as the most efficient structure, the second signal processing structure 400b can be configured with one 100MHz Low PHY block, two 50MHz Low PHY blocks, and two 20MHz Low PHY blocks.

Here, although it is shown as if the second signal processing structure 400b includes all five Low PHY blocks, in reality, at least one Low PHY block can be used according to the configuration control of the O-DU. For example, if the O-DU's configuration is two 50MHz, only the sixth Low PHY block 440a and the seventh Low PHY block 440b may be used, and at this time, the sixth Low PHY block 440a may have a capability of 100MHz, and the seventh Low PHY block 440b may have a capability of 50MHz or more. The O-RU may increase the number of Low PHY blocks according to the number of carriers based on the bandwidth allocation information related to the carrier included in the configuration control signal received from the O-DU for the second signal processing structure 400b. If the number of carriers (component carriers) is one, it includes only the sixth Low PHY block 440a. If the number is two, it includes the sixth Low PHY block 440a and the seventh Low PHY block 440b. If the number is three, it includes the sixth Low PHY block 440a, the seventh Low PHY block 440b, and the eighth Low PHY block 440c. If the number is four, it may include the sixth Low PHY block 440a, the seventh Low PHY block 440b, the eighth Low PHY block 440c, and the ninth Low PHY block 440d. If the number is five, it may include the sixth Low PHY block 440a, the seventh Low PHY block 440b, the eighth Low PHY block 440c, the ninth Low PHY block 440d, and the tenth Low PHY block 440e. In the O-DU, the 100MHz physical channel block must be included in the second signal processing structure 400b it configures, and the 50MHz, 50MHz, 20MHz, 20MHz blocks can be sequentially included. Also, while FIG. 4B illustrates that 100MHz should be included in the uppermost sixth Low PHY block 440a, the position of each physical channel block can be configured variously according to the setting. For example, a physical channel block having a 100MHz bandwidth capability may be set at the position of the lowermost tenth Low PHY block 440e.

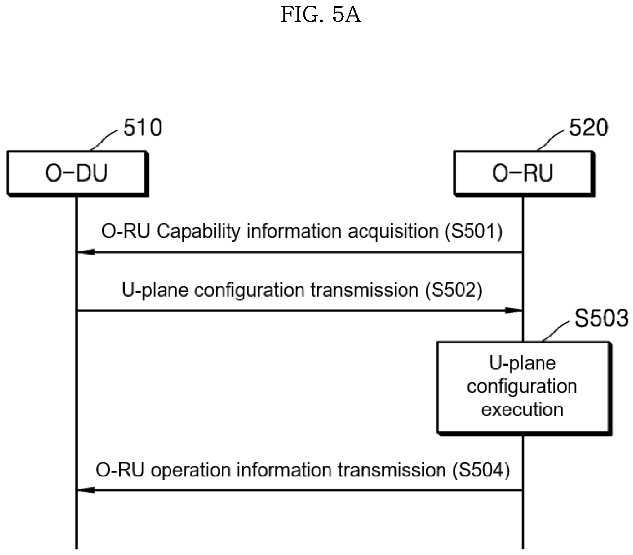

FIG. 5A is a flowchart illustrating an O-RU operation procedure according to an embodiment of the present disclosure.

The O-DU 510 and O-RU 520 of FIG. 5A may be the same as or similar to the O-RU and O-DU in FIGS. 1A to 4B. FIG. 5A briefly illustrates the procedures performed for multi-carrier operation according to an embodiment of the present disclosure.

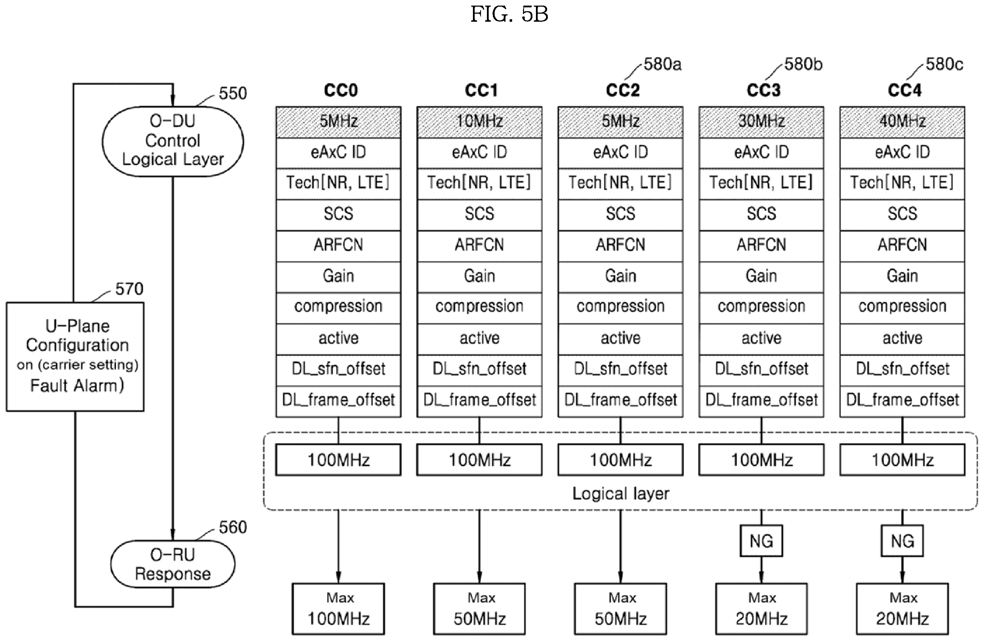

FIG. 5A may simply illustrate the operation procedure of an O-RU. FIG. 5A may illustrate a part of the start-up installation operation between an O-DU 510 and an O-RU 520. The start-up installation operation performed before the operation of FIG. 5 may include transport layer initialization and M-Plane connection setup, C/U-Plane Transport connection setup, etc. In the transport layer initialization process, DHCP (dynamic host configuration protocol) procedures can be performed to perform O-RU identification, VLAN Discovery, IP (internet protocol) address allocation for the O-RU, NETCONF client Discovery, etc. Then, the NETCONF Call Home procedure is performed, allowing the NETCONF client to establish an SSH (Secure Shell) connection and a NETCONF session with the O-RU to complete the M-Plane connection setup. After the M-Plane connection setup, the NETCONF client can perform C/U-Plane Transport connection setup and U-Plane setup between the O-DU 510 and the O-RU 520.

In step S501, the O-DU 510 may request and receive capability information of the O-RU 520 from the O-RU 520. Here, the capability information may include capability information corresponding to the endpoint type of antennas and paths for each carrier that the O-RU 520 has. The capability information may be information indicating the applicable BW for each carrier of the O-RU 520. The capability information may be information indicating whether the O-RU 520 can apply a carrier mapping algorithm.

In step S502, the O-DU 510 may determine and transmit a U-plane configuration based on the received capability information of the O-RU 520. The U-plane configuration may include carrier parameters. The U-plane configuration may include BW, Tech, frequency, gain, compression settings, etc. For example, it can inform the size of the BW for each of the multiple carriers.

In step S503, the O-RU 520 may perform the setup of the O-RU 520 based on the received U-plane configuration. In an embodiment, a multi-carrier mapping algorithm may be applied in the U-plane configuration step.

In step S504, the O-DU 510 may request and receive operation information of the O-RU 520. Here, the operation information may include information indicating the multi-carrier configuration information of the O-RU 520. It may also include information indicating whether there is an error in the configuration of the O-RU 520. It may also include information indicating whether the U-plane setup is completed. Also, the operation information may include a response to the configuration. Although not shown, the O-DU 510 may check the BW setting of the O-RU 520 based on the operation information. If the O-DU 510 confirms that there is a configuration error in the received operation information, it may "reject" the cell expansion of the corresponding carrier. For example, FIG. 5B shows an example of an error occurring in multi-carrier operation when the O-RU 520 receives and sets configuration information from the O-DU 510.

FIG. 5B is a view illustrating a case where an error occurs in a multi-carrier operation according to an embodiment of the present disclosure.

Referring to FIG. 5B, an O-DU may transmit physical layer control information to an O-RU (550). In this case, multi-carrier operation information may be transmitted according to an embodiment of the present disclosure, and information may be transmitted to use BWs of 5MHz, 10MHz, 5MHz, 30MHz, and 40MHz for a total of five multiple carriers. The O-RU may perform multi-carrier operation based on the received configuration information. However, a problem can be confirmed in the part that occurs and the part that does not occur in a second carrier (CC2) 580a, a third carrier (CC3) 580b, and a fourth carrier (CC4) 580c. In the case of the second carrier (CC2) 580a, the BW was set to 5MHz from the O-DU, but since it is a carrier that can be processed up to a maximum of 50MHz by the CAPABILITY of the Low-PHY BW, a problem may not occur. However, in the case of the third carrier (CC3) 580b and the fourth carrier (CC4) 580c, the capability of the Low-PHY BW can be processed up to a maximum of 20MHz each, but since the BW is set to 30MHz and 40MHz respectively from the O-DU, a problem of being unable to process occurs. In this case, the O-RU may generate a "Failed" alarm with a Fault ID of 11 for the third carrier (CC3) 580b and the fourth carrier (CC4) 580c in response to the configuration control (560) and transmit it to the O-DU (570).

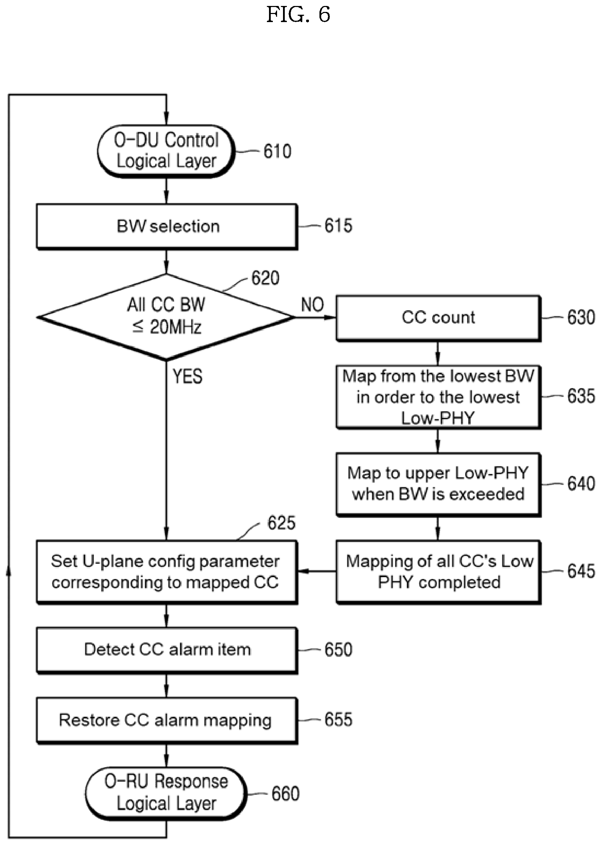

FIG. 6 is a flowchart illustrating a multi-carrier mapping algorithm according to an embodiment of the present disclosure.

The O-DU and O-RU of FIG. 6 may be the same as or similar to the O-DU and O-RU in FIGS. 1A to 5B described above. FIG. 6 may be an operation performed by an O-DU or an O-RU, or a controller that oversees them.

Referring to FIG. 6, an O-DU may transmit U-plane configuration control information to an O-RU (610). The U-plane configuration control information may represent the setting of a logical layer.

In step 615, the O-RU may detect the BW assigned to each carrier in the received U-plane configuration. For example, the O-RU may select the number of assigned BWs and the BW assigned to each carrier from the received configuration.

In step 620, the O-RU may determine whether the BW assigned to each carrier is all 20MHz or less. For example, it can check whether a BW of 20MHz or less has been assigned to all multiple carriers. Also, if a BW of 20MHz or less is assigned to all multiple carriers, it proceeds to step 625, and if even one is not assigned a BW of 20MHz or less, it proceeds to step 630.

In step 630, if the O-RU determines that even one multi-carrier is not assigned a BW of 20MHz or less, it may check how many multiple carriers are needed in total. The number of multiple carriers may be at least one and include up to five. The O-RU may check the number of carriers assigned in the received configuration control signal. The O-RU may determine the number of Low-PHY blocks (physical layer blocks) to be used based on the confirmed number of carriers. For example, if the number of assigned carriers is 3, the O-RU may determine to use 3 Low-PHY blocks. After determining the number of Low-PHY blocks to be used, the O-RU may sequentially determine 100MHz for carrier 0 (CC0), 50MHz for carrier 1 (CC1), 50MHz for carrier 2 (CC2), 20MHz for carrier 3 (CC3), and 20MHz for carrier 4 (CC4) for the Low-PHY blocks based on the number of Low-PHY blocks. The order of the carriers is not fixed as above, and it is natural that there is no problem even if it corresponds to a carrier of any number as long as the number is the same.

In step 635, the O-RU may perform mapping from the carrier with a low BW value among the assigned BWs, starting from the lowest carrier block, the 4th Low-PHY block.

In step 640, when performing mapping to the lowest Low-PHY block for a carrier with a low BW value in step 635, if the BW of the mapped block does not satisfy the assigned carrier BW (i.e., the assigned carrier's BW is larger than the block's BW), the corresponding carrier may be mapped to the immediately higher Low-PHY block. For example, if a carrier with a 30MHz BW is assigned to the 4th Low-PHY block with a 20MHz BW, mapping can be performed to the upper block, the 3rd Low-PHY block. However, in this case, since the 3rd Low-PHY block also has a 20MHz BW, it can be mapped to the upper block, the 2nd Low-PHY block. In the case of the 2nd Low-PHY block, since it has a 50MHz BW, the mapping can be completed as is.

In step 645, mapping for all carriers can be completed through the method of steps 630-640.

In step 625, the O-RU may set the U-plane configuration parameters corresponding to the mapped carriers. For example, if it is determined in step 620 that a BW of 20MHz or less is assigned to all multiple carriers, there is no need to apply the multi-carrier mapping algorithm, so each carrier can be sequentially mapped to the Low-PHY, and the U-plane configuration parameters can be set according to the assigned BW. As another embodiment, if the O-RU has completed mapping for the multiple carriers to the Low-PHY blocks in step 645, it may set the U-plane configuration parameters corresponding to the mapped carriers.

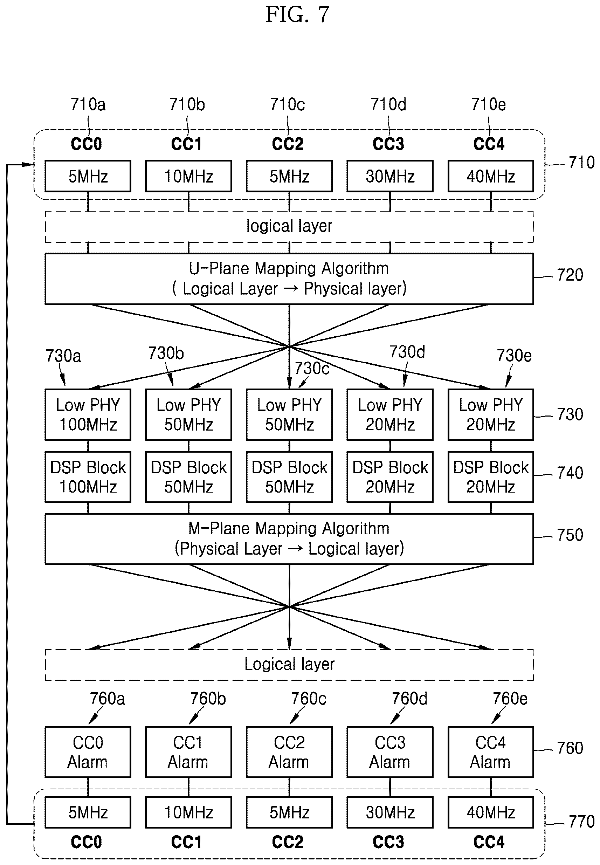

In step 650, alarm items can be detected for each carrier. Even if the mapping algorithm was applied in the previous steps, for alarm processing and reporting for each carrier, alarm processing and reporting according to the BW setting before the algorithm operation must be performed for the O-DU. For alarm processing and reporting according to the BW setting before the algorithm operation, an operation to restore the alarm mapping for each carrier can be performed in step 655. The O-RU processes the information after applying the carrier mapping algorithm and can restore the carrier mapping as set by the O-DU again. The alarm mapping restoration method will be described in detail in FIG. 7.

In step 660, after the setup is completed, the O-RU may transmit a response to the O-DU's U-plane configuration (including setting parameters) to the O-DU. That is, a response (ACK, NACK) on whether processing is possible for the O-DU's setting for each carrier can be sent.

Each step shown in FIG. 6 does not necessarily have to be performed, and some operations may not be performed depending on the setting.

FIG. 7 is a view illustrating a multi-carrier mapping and multi-carrier restoration mapping method according to an embodiment of the present disclosure.

The O-DU and O-RU of FIG. 7 may be the same as or similar to the O-DU and O-RU in FIGS. 1A to 6 described above. The operations of FIG. 7 may be operations performed by an O-DU or an O-RU, or a controller that oversees them.

FIG. 7 may illustrate an example where an O-RU processes multiple carriers in CBRS by utilizing a multi-carrier mapping algorithm according to an embodiment of the present disclosure.

Referring to FIG. 7, an O-RU may receive configuration control from an O-DU. The configuration control may be the same as or similar to step 610 in FIG. 6. The configuration control signal may include BW allocation information 710. In an embodiment, the BW allocation information 710 may include information indicating that a first carrier (CC0) 710a is assigned 5MHz, a second carrier (CC1) 710b is 10MHz, a third carrier (CC2) 710c is 5MHz, a fourth carrier (CC3) 710d is 30MHz, and a fifth carrier (CC4) 710e is 40MHz. This is an allocation on the logical layer, and in the conventional case, the O-RU had to perform processing in the block corresponding to the carrier assigned by the O-DU. Therefore, for each carrier that can be assigned from 0 to 100MHz, blocks had to be configured to handle 100MHz, which corresponded to a waste of resources and costs. However, by applying the signal processing structure (e.g., the second signal processing structure 400b of FIG. 4B) proposed in the present disclosure and applying the multi-carrier mapping algorithm, resources and costs can be saved.

The O-RU checks the BW allocation information 710 and can confirm whether the BW assigned to each carrier is 20MHz or less. If all BWs are 20MHz or less, signal processing is possible using the signal processing structure without applying a mapping algorithm. However, if even one BW is not 20MHz or less, a mapping algorithm needs to be applied. Referring to FIG. 7, since the fourth carrier (CC3) 710d and the fifth carrier (CC4) 710e exceed 20MHz at 30MHz and 40MHz respectively, a multi-carrier mapping algorithm can be applied. First, the O-RU may apply a U-plane mapping algorithm 720. The U-plane mapping algorithm 720 represents mapping from a logical layer to a physical layer, and indicates mapping to an appropriate Low PHY block 730 according to the size of the assigned BW. When applying the U-plane mapping algorithm 720, the O-RU counts the number of carriers included in the BW allocation information 710 and can map from the smallest BW in order to the lowest Low PHY block. In FIG. 7, the first carrier (CC0) 710a and the third carrier (CC2) 710c can be mapped to the lowest Low PHY block, the fourth Low PHY block 730d, and the fifth Low PHY block 730e. Next, the second carrier (CC1) 710b, which is the next smallest, can be mapped to the third Low PHY block 730c. Next, the fourth carrier (CC3) 710d, which is 30MHz, is mapped to the second Low PHY block 730b, and the fifth carrier (CC4) 710e, which is the largest, is mapped to the first Low PHY block 730a. In this case, the O-DU does not know about the block change due to the mapping algorithm within the O-RU, and the O-RU can arbitrarily set the signal processing structure and apply the mapping algorithm. In another embodiment, the O-DU may transmit a control message to apply the signal processing structure and mapping algorithm. After completing the mapping to the Low PHY block 730 according to the U-plane mapping algorithm 720, the DSP procedure 740 can be performed to complete the signal processing structure and perform signal processing. For example, the U-plane configuration parameters corresponding to the mapped carriers can be set.

After the completion of the signal processing structure or the performance of signal processing, the O-RU needs to apply a restoration mapping algorithm 750 again to set the carrier alarm. The restoration mapping algorithm 750 corresponds to an M-plane mapping algorithm and represents mapping from a physical layer to a logical layer. The restoration mapping algorithm 750 can be performed based on the initial BW allocation information 710 from the O-DU's configuration control information. Alternatively, the restoration mapping algorithm 750 can be performed through the reverse order of the U-plane mapping algorithm 720. According to the restoration mapping algorithm 750 in FIG. 7, the fifth carrier (CC4) 710e mapped to the first Low PHY block 730a is mapped to a fifth alarm block 760e, the fourth carrier (CC3) 710d mapped to the second Low PHY block 730b is mapped to a fourth alarm block 760d, the second carrier (CC1) 710b mapped to the third Low PHY block 730c is mapped to a second alarm block 760b, and the first carrier (CC0) 710a and the third carrier (CC2) 710c mapped to the fourth Low PHY block 730d and the fifth Low PHY block 730e respectively are mapped to a first alarm block 760a and a third alarm block 760c respectively. The O-RU can transmit the configuration result indicating whether configuration is possible for the carrier corresponding to the alarm mapped after the restoration mapping algorithm 750 to the O-RU by including it in a response signal 770. The O-DU, upon receiving the response signal 770, can perform subsequent signal processing by identifying it as processable regardless of whether the mapping algorithm was applied in the O-RU.

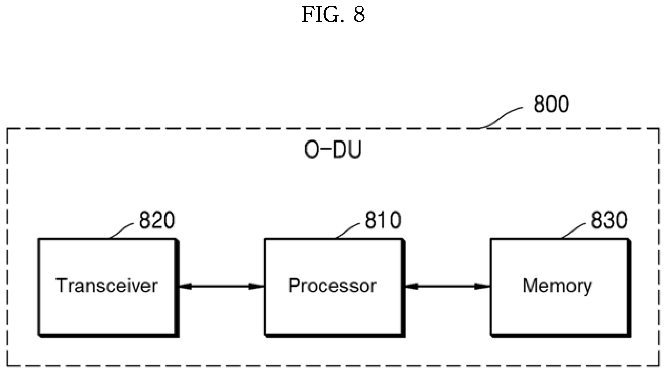

FIG. 8 is a view illustrating a configuration of an O-DU according to an embodiment of the present disclosure.

The O-DU of FIG. 8 can be configured to perform the same or similar operations as the O-DU described in FIGS. 1A to 7.

According to an embodiment of the present disclosure, in an O-DU 800, each function may be included in one device, and each function may be divided into each device.

According to an embodiment of the present disclosure, the O-DU 800 may include a controller (or processor) 810 that controls the overall operation of the O-DU, a transceiver (or transceiving unit) 820 including a transmitter and a receiver, and a memory 830. Of course, it is not limited to the above example, and the O-DU 800 may include more configurations than the configuration shown in FIG. 8, or may include fewer configurations.

According to an embodiment of the present disclosure, the transceiving unit 820 may transmit and receive signals with other network nodes (e.g., O-RU, controller, upper network entity). A signal transmitted and received with an O-RU or a controller may include a C-plane, U-plane, S-plane, M-plane signal, uplink data, and downlink data. In addition, the transceiving unit 820 may receive a signal through a wireless path or a wired path such as a Fiber and deliver it to the processor 810, and transmit a signal determined and output from the processor 810 through the channel.

According to an embodiment of the present disclosure, the processor 810 may control the O-DU device to perform any one of the operations of the embodiments of FIGS. 1 to 7. Meanwhile, the processor 810, the memory 830, and the transceiving unit 820 do not necessarily have to be implemented as separate modules, and may be implemented as one component in the form of a single chip. And, the processor 810, the memory 830, and the transceiving unit 820 may be electrically connected. In addition, the processor 810 may be an AP (Application Processor), a CP (Communication Processor), a circuit, an application-specific circuit, or at least one processor.

According to an embodiment of the present disclosure, the memory 830 may store data such as basic programs, application programs, and configuration information for the operation of the O-DU 800. In addition, the memory 830 may store uplink and downlink data received by the O-DU. In particular, the memory 830 may provide stored data in response to a request from the processor 810. The memory 830 may be composed of a storage medium such as ROM, RAM, hard disk, CD-ROM, and DVD, or a combination of storage media. In addition, the memory 830 may be plural. In addition, the processor 810 may perform the above-described embodiments based on a program stored in the memory 830 for performing the embodiments of the present disclosure described above.

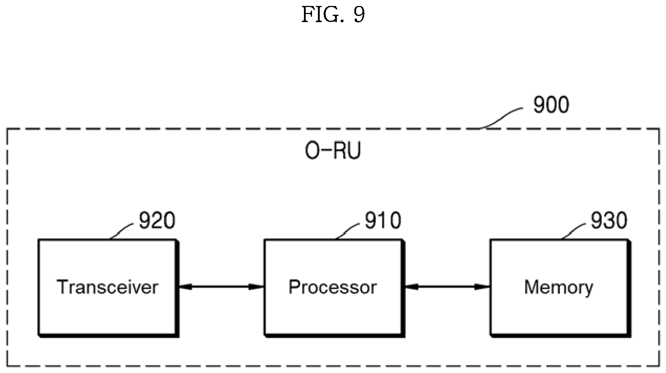

FIG. 9 is a view illustrating a configuration of an O-RU according to an embodiment of the present disclosure.

The O-RU of FIG. 9 can be configured to perform the same or similar operations as the O-RU described in FIGS. 1A to 8.

According to an embodiment of the present disclosure, in an O-RU 900, each function may be included in one device, and each function may be divided into each device.

According to an embodiment of the present disclosure, the O-RU 900 may include a controller (or processor) 910 that controls the overall operation of the O-RU, a transceiver (or transceiving unit) 920 including a transmitter and a receiver, and a memory 930. Of course, it is not limited to the above example, and the O-RU 900 may include more configurations than the configuration shown in FIG. 9, or may include fewer configurations.

According to an embodiment of the present disclosure, the transceiving unit 920 may transmit and receive signals with other network nodes (e.g., O-DU, controller, upper network entity). A signal transmitted and received with a middle node may include a C-plane, U-plane, S-plane, M-plane signal, uplink data, and downlink data. In addition, the transceiving unit 920 may receive a signal through a wireless path or a wired path such as a Fiber and deliver it to the processor 910, and transmit a signal determined and output from the processor 910 through the channel.

According to an embodiment of the present disclosure, the processor 910 may control the O-RU device to perform any one of the operations of the embodiments of FIGS. 1 to 8. Meanwhile, the processor 910, the memory 930, and the transceiving unit 920 do not necessarily have to be implemented as separate modules, and may be implemented as one component in the form of a single chip. And, the processor 910, the memory 930, and the transceiving unit 920 may be electrically connected. In addition, the processor 910 may be an AP (Application Processor), a CP (Communication Processor), a circuit, an application-specific circuit, or at least one processor.

According to an embodiment of the present disclosure, the memory 930 may store data such as basic programs, application programs, and configuration information for the operation of the O-RU 900. In addition, the memory 930 may store uplink and downlink data received by the O-RU. In particular, the memory 930 may provide stored data in response to a request from the processor 910. The memory 930 may be composed of a storage medium such as ROM, RAM, hard disk, CD-ROM, and DVD, or a combination of storage media. In addition, the memory 930 may be plural. In addition, the processor 910 may perform the above-described embodiments based on a program stored in the memory 930 for performing the embodiments of the present disclosure described above.

The various operations of the methods described above may be performed by any suitable means capable of performing corresponding functions. The means includes, but is not limited to, various hardware and/or software component(s) and/or module(s), including an application specific integrated circuit (ASIC), or a processor. In general, when there are operations corresponding to the drawings, these operations may have a corresponding counterpart and functional components having the same number as the number of the counterpart.

The various illustrative logic blocks, modules, and circuits described in connection with the present disclosure may be implemented or performed by a general-purpose processor, a digital signal processor (DSP), an application specific integrated circuit (ASIC), a field programmable gate array (FPGA) or other programmable logic device (PLD), a discrete gate or transistor logic, discrete hardware components, or any combination thereof designed to perform the functions disclosed herein. The general-purpose processor may be a microprocessor, but may alternatively be any commercially available processor, controller, microcontroller, or state machine. The processor may also be implemented in a combination of computing devices, for example, a combination of a DSP and a microprocessor, a plurality of microprocessors, one or more microprocessors in connection with a DSP core, or any other such configuration.

And, the term "determine" as used above covers a very wide variety of actions. For example, "determining" may include calculating, computing, processing, deriving, investigating, looking up (e.g., looking up in a table, database, or other data structure), and ascertaining. Also, "determining" may include receiving (e.g., receiving information), and accessing (e.g., accessing data in a memory). Also, "determining" may include resolving, selecting, choosing, and establishing.

One of ordinary skill in the art to which the present disclosure pertains will appreciate that various modifications and variations are possible without departing from the essential characteristics of the technical idea of the present disclosure.

Accordingly, the embodiments illustrated in the present disclosure are for explanatory purposes and not to limit the technical idea of the present disclosure, and the scope of the technical idea of the present disclosure is not limited by these embodiments.

The scope of protection of the inventive concept of the present disclosure should be interpreted in accordance with the claims below, and all technical ideas within the equivalent scope should be construed as being included in the scope of the technical idea of the present disclosure.

## Claims

1. A method performed by an electronic device in a communication system, the method comprising:
receiving a configuration control signal from another electronic device;
determining a signal processing structure based on the configuration control signal; and
performing signal processing based on the signal processing structure,
wherein the signal processing structure is configured with at least one and five or less physical layer blocks based on the configuration control signal,
the signal processing structure includes a physical layer block having a bandwidth capability of 100MHz, and
the signal processing structure preferentially includes up to two physical layer blocks having a bandwidth capability of 50MHz and then includes up to two physical layer blocks having a bandwidth capability of 20MHz according to the number of the physical layer blocks.

2. The method of claim 1,
wherein the configuration control signal includes bandwidth allocation information for at least one component carrier, and
the bandwidth allocation information includes information about the number of the at least one carrier and the size of the bandwidth corresponding to the at least one carrier.

3. The method of claim 2,
wherein the step of performing signal processing based on the signal processing structure comprises:
when the size of the bandwidth corresponding to the at least one carrier indicated by the bandwidth allocation information is all 20MHz or less,
performing signal processing by mapping to the physical layer blocks corresponding to a carrier index of the at least one carrier.

4. The method of claim 2,
wherein the step of performing signal processing based on the signal processing structure comprises:
when the size of at least one bandwidth corresponding to the at least one carrier indicated by the bandwidth allocation information exceeds 20MHz,
mapping a carrier with the smallest bandwidth size among the at least one carrier to a physical layer block with the smallest bandwidth capability among the physical layer blocks.

5. The method of claim 4,
wherein the step of performing signal processing based on the signal processing structure comprises:
when a value of the bandwidth of the carrier with the smallest bandwidth size among the at least one carrier is greater than a value of the bandwidth capability of the physical layer block with the smallest bandwidth capability,
mapping the carrier with the smallest bandwidth size among the at least one carrier to a physical layer block with the next smallest bandwidth capability, instead of mapping to the physical layer block with the smallest bandwidth capability.

6. The method of claim 4,
wherein the step of performing signal processing based on the signal processing structure comprises:
mapping in order of carriers with smaller bandwidth sizes among the at least one carrier to physical layer blocks with smaller bandwidth capabilities among the physical layer blocks.

7. The method of claim 3 or claim 6,
wherein the step of performing signal processing based on the signal processing structure comprises:
performing digital signal processing on data corresponding to at least one carrier mapped to the physical layer blocks based on the signal processing structure.

8. The method of claim 7, further comprising:
mapping the at least one digitally signal-processed carrier to an alarm block corresponding to the carrier index of the at least one carrier included in the configuration control signal.

9. The method of claim 8, further comprising:
transmitting a response signal including a configuration result for the configuration control signal to the other electronic device based on the mapped alarm block.

10. An electronic device in a communication system, the electronic device comprising:
a transceiver;
a memory; and
at least one processor connected to the transceiver and the memory,
wherein the at least one processor is configured to:
receive a configuration control signal from another electronic device,
determine a signal processing structure based on the configuration control signal, and
perform signal processing based on the signal processing structure,
wherein the signal processing structure is configured with at least one and five or less physical layer blocks based on the configuration control signal,
the signal processing structure includes a physical layer block having a bandwidth capability of 100MHz, and
the signal processing structure preferentially includes up to two physical layer blocks having a bandwidth capability of 50MHz and then includes up to two physical layer blocks having a bandwidth capability of 20MHz according to the number of the physical layer blocks.

11. The electronic device of claim 10,
wherein the configuration control signal includes bandwidth allocation information for at least one component carrier, and
the bandwidth allocation information includes information about the number of the at least one carrier and the size of the bandwidth corresponding to the at least one carrier.

12. The electronic device of claim 11,
wherein the at least one processor is configured to:
when the size of the bandwidth corresponding to the at least one carrier indicated by the bandwidth allocation information is all 20MHz or less,
perform signal processing by mapping to the physical layer blocks corresponding to a carrier index of the at least one carrier.

13. The electronic device of claim 11,
wherein the at least one processor is configured to:
when the size of at least one bandwidth corresponding to the at least one carrier indicated by the bandwidth allocation information exceeds 20MHz,
map a carrier with the smallest bandwidth size among the at least one carrier to a physical layer block with the smallest bandwidth capability among the physical layer blocks.

14. The electronic device of claim 13,
wherein the at least one processor is configured to:
when a value of the bandwidth of the carrier with the smallest bandwidth size among the at least one carrier is greater than a value of the bandwidth capability of the physical layer block with the smallest bandwidth capability,
map the carrier with the smallest bandwidth size among the at least one carrier to a physical layer block with the next smallest bandwidth capability, instead of mapping to the physical layer block with the smallest bandwidth capability.

15. The electronic device of claim 13,
wherein the at least one processor is configured to:
map in order of carriers with smaller bandwidth sizes among the at least one carrier to physical layer blocks with smaller bandwidth capabilities among the physical layer blocks.
